(19) Europäisches Patentamt / European Patent Office / Office européen des brevets

(11) **EP 4 737 311 A2**

(12) **EUROPEAN PATENT APPLICATION**

(43) Date of publication:
06.05.2026 Bulletin 2026/19

(21) Application number: 26166898.2

(22) Date of filing: 21.01.2020

(51) International Patent Classification (IPC):
*B64C 23/00* $^{(2006.01)}$

(52) Cooperative Patent Classification (CPC):
**B64D 27/14; B64C 21/01; B64C 21/025;
B64C 21/08; B64C 39/08; B64D 33/04;**
B64C 2230/04; B64C 2230/06; Y02T 50/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 18.01.2019 US 201962794464 P

(62) Document number(s) of the earlier application(s) in
accordance with Art. 76 EPC:
**20802173.3 / 3 911 569**

(71) Applicant: **Jetoptera, Inc.
Edmonds, WA 98020 (US)**

(72) Inventor: **EVULET, Andrei
Edmonds, 98020 (US)**

(74) Representative: **K2 IP Limited
c/o Keltie LLP
No.1 London Bridge
London SE1 9BA (GB)**

Remarks:
This application was filed on 23-03-2026 as a
divisional application to the application mentioned
under INID code 62.

(54) **FLUIDIC PROPULSIVE SYSTEM**

(57) An aircraft includes a fuselage and at least one primary wing having an upper surface, at least one recess in the upper surface and at least one conduit in fluid communication with the at least one recess. At least one ejector is disposed within the at least one recess and is configured to receive compressed air via the at least one conduit.

*Fig. 1*

EP 4 737 311 A2

**Description**

PRIORITY CLAIM

This application claims priority to U.S. Prov. Pat. Appl. No. 62/794,464 filed January 18, 2019 the contents of which are hereby incorporated by reference in their entirety as if fully set forth herein.

COPYRIGHT NOTICE

This disclosure is protected under United States and/or International Copyright Laws. © 2020 Jetoptera, Inc. All Rights Reserved. A portion of the disclosure of this patent document contains material which is subject to copyright protection. The copyright owner has no objection to the facsimile reproduction by anyone of the patent document or the patent disclosure, as it appears in the Patent and/or Trademark Office patent file or records, but otherwise reserves all copyrights whatsoever.

BACKGROUND

The lift generated from an ordinary airfoil results from the airflow condition around the airfoil and the geometry of said airfoil. By changing the speeds and the angle of attack and the surfaces such as flaps (surface changes) the lift of the airfoil can be controlled; the goal is to maximize lift generation with compact and light wings. Wings are in general growing larger for better efficiency and made of composites to keep the weight in check.

It is desired to minimize the weight of a wing and maximize the lift generation. It is desired to minimize the footprint and weight of a thrust generating device and maximize its output (thrust). This translates into minimization of fuel or energy consumption.

In most conventional aircraft, it is not currently possible to direct the jet efflux at an airfoil or wingfoil to utilize its lost energy. In the case of turbojets, the high temperature of the jet efflux actually precludes its use for lift generation via an airfoil. Typical jet exhaust temperatures are 1000 degrees Centigrade and sometimes higher when post-combustion is utilized for thrust augmentation, as is true for most military aircraft. When turbofans are used, in spite of the usage of high by-pass on modern aircraft, a significant non-axial direction residual element still exists, due to the fan rotation, in spite of vanes that direct the fan and core exhaust fluids mostly axially. The presence of the core hot gases at very high temperatures and the residual rotational movement of the emerging mixture, in addition to the cylindrical nature of the jets in the downwash, make the use of airfoils directly placed behind the turbofan engine impractical. In addition, the mixing length of hot and cold streams from the jet engines such as turbofans is occurring in miles, not inches. On the other hand, the current use of larger turboprops generates large downwash cylindrical airflows the size of the propeller diameters, with a higher degree of rotational component velocities behind the propeller and moving large amounts of air at lower speeds. The rotational component makes it difficult to utilize the downstream kinetic energy for other purposes other than propulsion, and hence, part of the kinetic energy is lost and not efficiently utilized. Some of the air moved by the large propellers is also directed to the core of the engine. In summary, the jet efflux from current propulsion systems has residual energy and potential not currently exploited.

BRIEF DESCRIPTION OF THE DRAWING FIGURES

FIG. 1 illustrates a top perspective view of an aircraft according to an embodiment;

FIG. 2 is a front plan view of the aircraft illustrated in FIG. 1;

FIG. 3 illustrates in exploded view of a wing and ejector assembly of the aircraft illustrated in FIG. 1;

FIG. 4 illustrates a top partial cross-sectional perspective view of the wing and ejector assembly of the aircraft illustrated in FIG. 1 including a turbine and compressor assembly;

FIG. 5 illustrates a top plan view of an aircraft according to an alternative embodiment; and

FIG. 6 illustrates a top perspective view of an aircraft according to another alternative embodiment.

DETAILED DESCRIPTION

This application is intended to describe one or more embodiments of the present invention. It is to be understood that the use of absolute terms, such as "must," "will," and the like, as well as specific quantities, is to be construed as being applicable to one or more of such embodiments, but not necessarily to all such embodiments. As such, embodiments of the invention may omit, or include a modification of, one or more features or functionalities described in the context of such absolute terms. In addition, the headings in this application are for reference purposes only and shall not in any way affect the meaning or interpretation of the present invention.

An embodiment combines features that augment both thrust and lift by embedding thrusters/ejectors in a lift generating device such as a wing or other aerodynamic surface. Such ejectors may be embedded on, for example, the top surface of the wing.

The thrust augmentation device that may be called an ejector, described in, for example US Patent Application Number 15/256,178, which is hereby incorporated by reference as if fully set forth herein, uses a pressurized fluid flow, such as compressed air, which otherwise may produce a certain amount of thrust by expansion to atmospheric conditions (entitlement thrust,) but via entrainment of ambient air and energy transfer, generates more thrust and therefore augments the entitlement thrust. The ejector can be made non-round in shape, and given shapes that are similar to the upper surface of airfoils, which makes it easy to embed into said airfoil.

An embodiment of the present invention combines the two elements. It brings together a thrust augmentation of, for example, 2.0, with a lift augmentation and enables the airfoil to have aggressive angles of attack without stall, at least 1.5 times lift enhancement achieved through the combination of boundary layer ingestion and blown jet surface. The combination can enable STOL and maneuverability of aircraft beyond current capabilities of separate systems.

In an embodiment of the present invention, the stream emitted by the ejector can be used for lift generation by directing it straight to a thin airfoil (e.g., a trailing edge surface of the wing disposed aft of the exit plane of the ejector) for lift generation. For example, where an ejector efflux axial velocity is 125% greater than the aircraft airspeed, the portion of the wing receiving the jet efflux stream can generate more than 50% higher lift for the same wingspan compared to the case where the wingspan is solely washed by the airspeed of the aircraft air. Using this example, if the ejector efflux velocity is increased to 150%, the lift becomes more than 45% higher than the original wing at aircraft airspeed, including a density drop effect if a pressurized exhaust gas from a turbine was used, for instance.

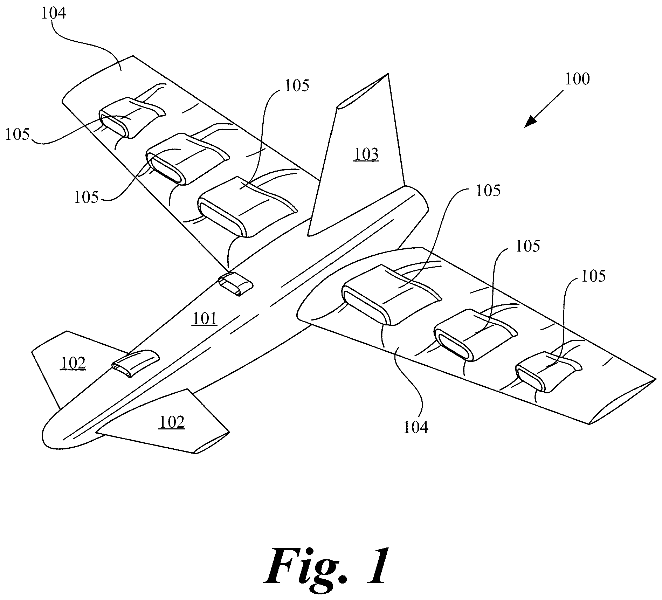

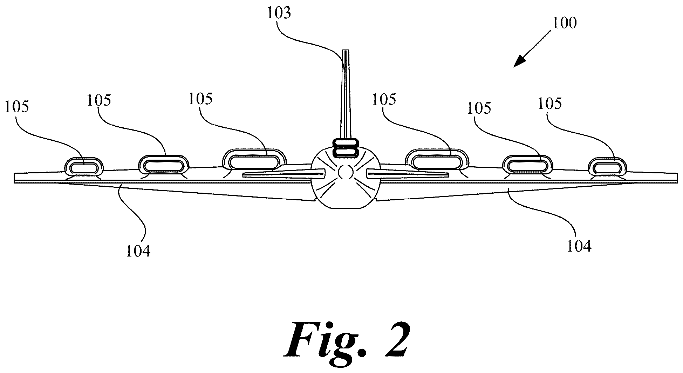

FIGS. 1 and 2 illustrate an aircraft 100 according to an embodiment of the invention. Aircraft 100 includes a fuselage 101 to which are attached forward canard wings 102 and tail fin 103. Aircraft 100 further includes a pair of primary wings 104 attached to the fuselage 101 and in which are embedded ejectors 105. In the illustrated embodiment, the size of each ejector 105 is progressively smaller as they are positioned from the fuselage 101 to the tips of wings 104.

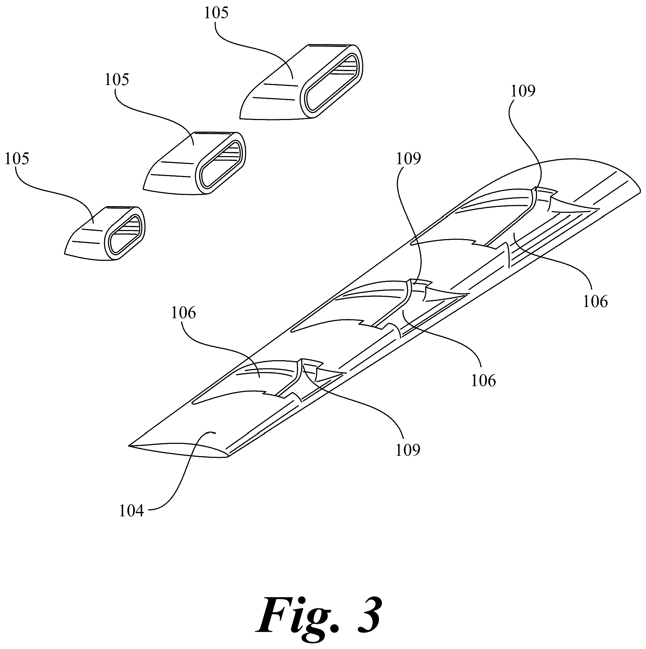

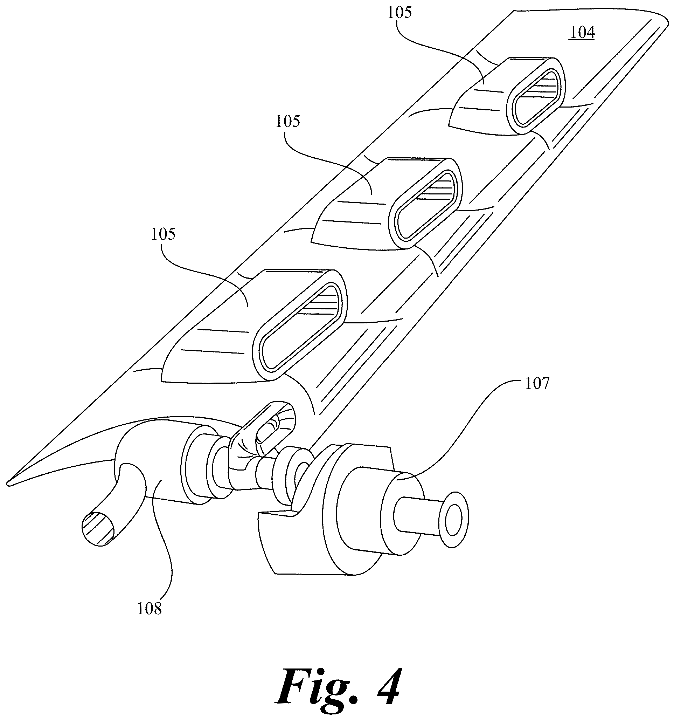

As best illustrated in FIG. 3, wings 104 include recesses 106 configured to receive and accommodate ejectors 105 as well as serve as aerodynamic surfaces fore and aft of each ejector. Referring to FIG. 4, aircraft 100 may further include a gas turbine 107 and compressor 108 that distributes compressed air throughout the interior of the wing 104 and to the ejectors 105 via conduits 109, which are illustrated in FIG. 3.

As a result of this configuration, at least one embodiment of the invention provides a lift and thrust augmentation device, combining a lift generating surface 104 approximatively shaped like an airfoil of very aggressive aerodynamic geometry, with ejectors 105 using a source of pressurized fluid such as, for example, air of exhaust gas. The ejectors 105 are geometrically and functionally shaped to conform to said lift generating device such that the combination thereof generates more lift and thrust than the separate airfoil shaped device 104 and ejectors separately.

In such an embodiment, the inlets of the ejectors 105 are optimally placed and distributed along the span on the upper surface of the wing 104 to allow the boundary layer ingestion formed on the leading edge of and streamwise along the wing upper surface to eliminate boundary layer separation and therefore delay or eliminate stall to increased angles of attack.

In such an embodiment, the outlets of the ejectors 105 are optimally placed and distributed along the span on the upper surface of the wing 104 to allow the boundary layer to be energized and ejected as wall jets streamwise along the wing's upper surface to control the lift generation of the upper surface of the wing.

In such an embodiment, a pressurized fluid is supplied through the wing 104 to the ejectors 105 in a fluid network that allows modulation and shut-off of each of the ejectors individually, hence distributing not only thrust but also lift where needed, when needed.

Alternatively, a wing such as a light wingfoil could be deployed directly behind the ejector exit plane, immediately after the vehicle has completed the take-off maneuvers and is transitioning to the level flight, helping generate more lift for less power from the engine.

Alternatively, using this embodiment of the present invention, the wing need not be as long in wingspan, and for the same cord, the wingspan can be reduced by more than 40% to generate the same lift. In this lift L equation (Eq. 1) known by those familiar with the art:

$$L = \frac{1}{2} \rho V2SC_L \qquad\qquad \text{Eq. 1}$$

where S is the surface area of the wing, $\rho$ is the density, V is the velocity of the aircraft (wing), and $C_L$ is the lift coefficient. A UAV with a wingspan of *e.g.,* 10 ft. can reduce the wingspan to merely 6 ft. provided the jet is oriented directly to the wing at all times during level flight, with a wing that is thin and has a chord, camber and $C_L$ similar to the original wing. The detrimental impact of temperature on the density is much smaller, if the mixing ratio (or entrainment ratio) is large, and hence the jet is only slightly higher in temperature.

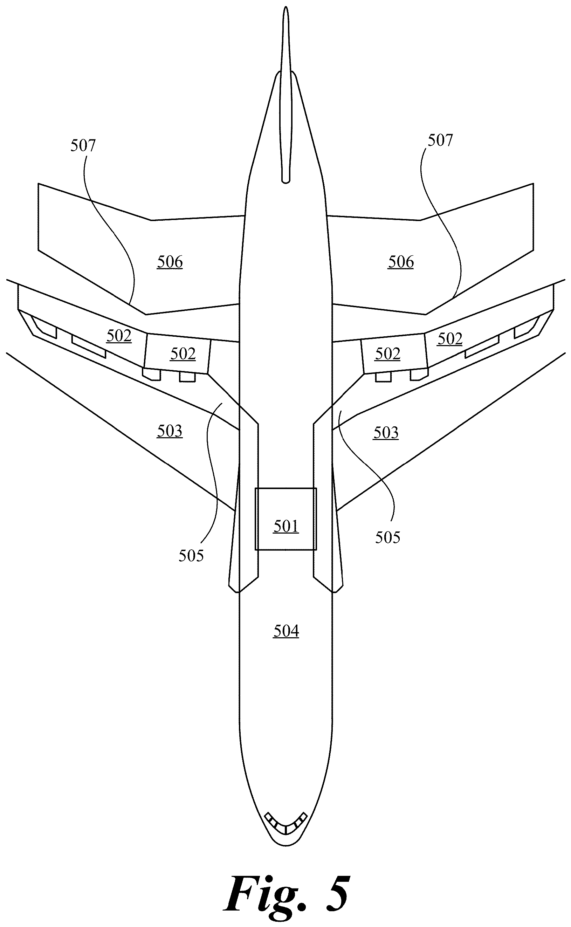

FIG. 5 illustrates an embodiment that provides an alternative to the traditional approach of placing jet engines on the wings of an aircraft to produce thrust. In FIG. 5, a gas generator 501 produces a stream of motive air for powering a series of ejectors 502 that are embedded in the primary airfoils, such as wings 503, for forward propulsion by emitting the gas stream directly from the trailing edge of the primary airfoils. In this embodiment, the gas generator 501 is embedded into the main-body fuselage 504 of the aircraft, is fluidly coupled to the ejectors 502 via conduits 505 and is the sole means of propulsion of the aircraft. Ejectors 502 may be circular or non-circular, have correspondingly shaped outlet structure similar to terminal end 101 and provide, at a predetermined adjustable velocity, the gas stream from generator 501 and conduits 505. Additionally, ejectors 502 may be movable in a manner similar to that of flaps or ailerons, rotatable through a 180° angle and can be actuated to control the attitude of the aircraft in addition to providing the required thrust. Secondary airfoils 506 having leading edges 507 are placed in tandem with wings 503 and directly behind ejectors 502 such that the gas stream from the ejectors 502 flows over the secondary airfoils 506. The secondary airfoils 506 hence receive a much higher velocity than the airspeed of the aircraft, and as such creates a high lift force, as the latter is proportional to the airspeed squared. The entirety of the secondary airfoils 506 may be rotatable about an axis oriented parallel to the leading edges 507.

In this embodiment of the present invention, the secondary airfoil 506 will see a moderately higher temperature due to mixing of the motive fluid produced by the gas generator 501 (also referred to as the primary fluid) and the secondary fluid, which is ambient air, entrained by the motive fluid at a rate between 5-25 parts of secondary fluid per each primary fluid part. As such, the temperature that the secondary airfoil 506 sees is a little higher than the ambient temperature, but significantly lower than the motive fluid, allowing for the materials of the secondary wing to support and sustain the lift loads, according to the formula: $T_{mix}=(T_{motive}+ER*T_{amb})/(1+ER)$ where $T_{mix}$ is the final fluid mixture temperature of the jet efflux emerging from the ejector 502, ER is the entrainment rate of parts of ambient air entrained per part of motive air, $T_{motive}$ is the hotter temperature of the motive or primary fluid, and $T_{amb}$ is the approaching ambient air temperature.

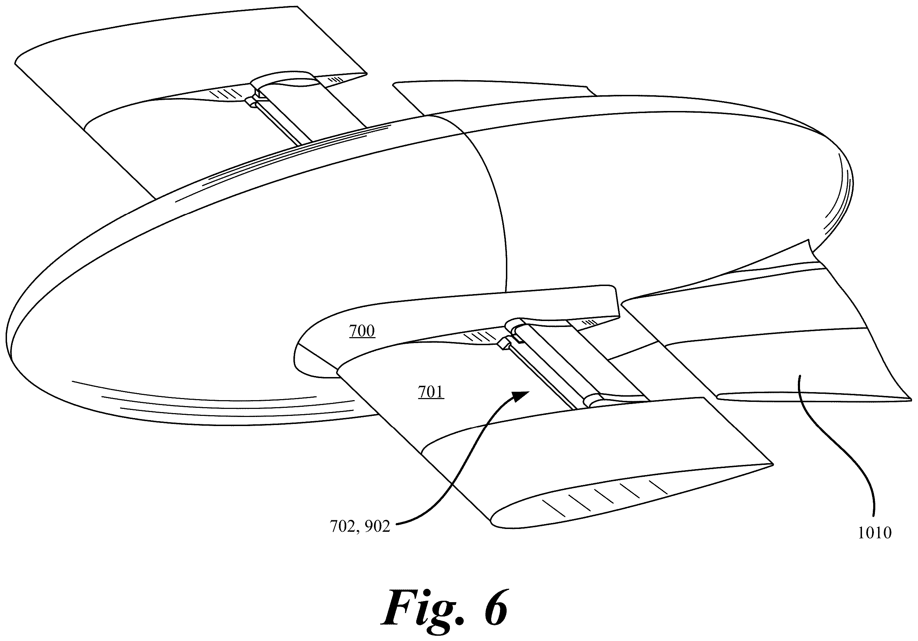

FIG. 6 depicts an alternative embodiment of the present invention featuring tandem wings. In the illustrated embodiment, a secondary airfoil 1010 is placed directly downstream of the augmenting airfoils 702, 902 such that the fluid flowing over the primary airfoil 701 and the gas stream from the augmenting airfoils flows over the secondary airfoil. The combination of the two relatively shorter wings 701, 1010 produce more lift than that of a much larger-spanned wing lacking the augmenting airfoils 702, 902 and that rely on a jet engine attached to a larger wing to produce thrust.

Although the foregoing text sets forth a detailed description of numerous different embodiments, it should be understood that the scope of protection is defined by the words of the claims to follow. The detailed description is to be construed as exemplary only and does not describe every possible embodiment because describing every possible embodiment would be impractical, if not impossible. Numerous alternative embodiments could be implemented, using either current technology or technology developed after the filing date of this patent, which would still fall within the scope of the claims.

Thus, many modifications and variations may be made in the techniques and structures described and illustrated herein without departing from the spirit and scope of the present claims. Accordingly, it should be understood that the methods and apparatus described herein are illustrative only and are not limiting upon the scope of the claims.

**Claims**

1.  An aircraft (100), comprising:

    a fuselage (101);
    a primary wing (104) coupled to the fuselage (101) and having an upper surface, a distal end and a leading edge;
    a source of pressurized fluid (107, 108) coupled to the fuselage (101);
    at least one conduit (109) in fluid communication with the source; and
    multiple ejectors (105), each of the multiple ejectors (105) having inlets and being configured to receive pressurized fluid via the at least one conduit;
    wherein the upper surface is configured to receive and accommodate a respective one of the multiple ejectors (105) and to serve as an aerodynamic surface fore and aft of the ejector (105).

2. An aircraft, comprising at least one recess in the upper surface, wherein said at least one conduit is in fluid communication with the at least one recess, and at least one of the ejectors is disposed within the at least one recess.

3. An aircraft, comprising:

a fuselage;
at least one primary wing having an upper surface, at least one recess in the upper surface and at least one conduit in fluid communication with the at least one recess; and
at least one ejector disposed within the at least one recess and configured to receive compressed air via the at least one conduit.

4. A general lift and thrust augmentation device, combining a lift generating surface approximatively shaped like an airfoil of very aggressive aerodynamic geometry, with ejectors using a source of pressurized fluid such as, for example, air of exhaust gas, said ejectors geometrically and functionally shaped in a mainly conform to said lift generating device such that the combination thereof is generating more lift and thrust than the separate airfoil shaped device and ejectors separately, respectively.

5. The device of claim 4 where the inlets of the ejector are optimally placed and distributed along the span on the upper surface of the airfoil to allow the boundary layer ingestion formed on said leading edge and streamwise along the airfoil upper surface to eliminate boundary layer separation and therefore delay or eliminate stall to increased angles of attack.

6. The device of claim 4 where the outlets of the ejectors are optimally placed and distributed along the span on the upper surface of the airfoil to allow the boundary layer to be energized and ejected as wall jets streamwise along the airfoil's upper surface to control the lift generation of the said upper surface of the airfoil.

7. The device of claim 4 where a pressurized fluid is supplied through the airfoil via its root, to the said ejectors in a fluid network that allows modulation and shut-off of each of the ejectors individually, hence distributing not only thrust but also lift where needed, when needed.

*Fig. 1*

*Fig. 2*

**Fig. 3**

**Fig. 4**

**Fig. 5**

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62794464
- US 256178